Europäisches Patentamt

European Patent Office

Office européen des brevets

(11) Veröffentlichungsnummer : **0 395 930 B1**

## (12) EUROPÄISCHE PATENTSCHRIFT

(45) Veröffentlichungstag der Patentschrift :
**29.07.92 Patentblatt 92/31**

(21) Anmeldenummer : **90107189.4**

(22) Anmeldetag : **14.04.90**

(51) Int. Cl.⁵ : **B60S 1/52**

(54) Scheibenwaschanlage für Kraftfahrzeuge.

(30) Priorität : **05.05.89 DE 3914767**

(43) Veröffentlichungstag der Anmeldung :
**07.11.90 Patentblatt 90/45**

(45) Bekanntmachung des Hinweises auf die
Patenterteilung :
**29.07.92 Patentblatt 92/31**

(84) Benannte Vertragsstaaten :
**ES FR GB IT SE**

(56) Entgegenhaltungen :
**DE-A- 2 931 893**
**DE-A- 3 828 999**
**US-A- 3 017 120**

(73) Patentinhaber : **Hella KG Hueck & Co.**
**Rixbecker Strasse 75 Postfach 28 40**
**W-4780 Lippstadt (DE)**

(72) Erfinder : **Orth, Peter**
**Buchenweg 13**
**W-4780 Lippstadt (DE)**
Erfinder : **Danker, Günther**
**Telemannstrasse 10**
**W-4780 Lippstadt (DE)**
Erfinder : **Witt, Ulrich**
**Bökenförder Strasse 87**
**W-4780 Lippstadt (DE)**

EP 0 395 930 B1

**Beschreibung**

Die Erfindung bezieht sich auf eine Scheibenwaschanlage für Kraftfahrzeuge, insbesondere Streuscheibenwaschanlage, mit einer Druckerzeugungseinrichtung zur Förderung der Reinigungsflüssigkeit, mit einer unterhalb einer Karosserieöffnung einbaubaren Verstellvorrichtung der Düse, welche aus einer zurückversetzten Ruhelage gegen die Kraft einer Schraubenfeder in eine Gebrauchsstellung ausfahrbar ist, und mit einem Düsenträger, welcher aus einer zwischen einem oberen und unteren Gehäuseteil eingespannten Rollmembran und einer in eine zentrale Öffnung der Rollmembran eingesetzten rohrförmigen Hülse gebildet wird, deren mit der Düse verbundenes Ende aus der Öffnung der in der Ruhestellung eine topfförmige Gestalt aufweisenden Rollmembran herausragt, der als Stützfläche eine zylindrische Innenfläche des oberen Gehäuseteils dient.

Eine solche Scheibenwascheinrichtung ist aus dem DE-U-8 802 529 bekannt. Hierbei kann sich in dem oberen Gehäuseteil oberhalb der Rollmembran Wasser ansammeln, welches im gefrorenen Zustand die Rollmembran in dem Gehäuse festsetzt. Außerdem baut die Verstellvorrichtung relativ groß, da die Schraubenfeder neben dem die Rollmembran aufnehmenden Gehäuse angeordnet ist. Als Schraubenfeder dient eine Zugfeder, welche zwischen der Grundplatte der Verstellvorrichtung und der Düse eingesetzt ist. Als Führung für die Düse dient ein Hebel, welcher an der Grundplatte schwenkbar gelagert ist. Bei der Lagerung einer solchen Verstellvorrichtung können ihre einzelnen Bauelemente leicht beschädigt werden.

Aus der DE-A-2 931 893 ist eine Scheibenwaschanlage bekannt, bei welcher als Membran ein Balg dient, welcher an seiner Außenseite nicht abgestützt ist. Eine solcher nicht abgestützter Balg dehnt sich beim Einströmen der Reinigungsflüssigkeit wie ein Ballon auf, so daß die hierdurch entstehende schnellere Ermüdung des Materials die Lebensdauer des Balgs verkleinert. Als Schraubenfeder dient eine Druckfeder, welche die die Düse aufnehmende rohrförmige Hülse umgibt und mit dem einen Ende an einer Stufe in der Mantelfläche der rohrförmigen Hülse anliegt und sich mit dem anderen Ende an der Innenseite der Karosseriewandung abstützt. Damit durch die Karosserieöffnung hindurch kein Wasser bis zum Balg vordringen kann, ist die Schraubenfeder von einer elastischen Haut umgeben, in welcher sich das Wasser sammeln kann und durch eine Öffnung in der Haut und über einen in die Öffnung eingesetzten Schlauch nach außen abfließen soll. Dies ist jedoch bei einer solchen Ausführungsform nicht sicher gewährleistet, da ein solcher Schlauch leicht verstopfen kann bzw. bei unsachgemäßer Montage eine Knickstelle aufweisen kann.

Aus der deutschen Patentanmeldung DE-A-3 828 999 oder der am 01-03-90 veröffentlichten EP-A-0 355 584, die unter Art. 54(3) und (4) E,P,Ü, fällt ist eine Scheibenwaschanlage beschrieben, bei welcher die topfförmige Rollmembran an der Mantelfläche und an der Außenfläche des Bodens einer topfförmigen Hülse anliegt und die Schraubenfeder eine Druckfeder ist, welche die die Düse aufnehmende rohrförmige Hülse umgibt und mit dem einen Ende an dem Boden der Hülse anliegt und mit dem anderen Ende sich an dem oberen Gehäuseteil abstützt.

Aufgabe der Erfindung ist es, die im Gattungsbegriff beschriebene Scheibenwaschanlage für Kraftfahrzeuge derart zu verbessern, daß sämtliche Bauelemente der Verstellvorrichtung der Düse in einem kompakt bauenden Gehäuse untergebracht sind, und darüber hinaus, auch wenn in der topfförmigen Rollmembran angesammeltes Wasser gefroren ist, die Funktion der Verstellvorrichtung weiterhin gegeben ist, das heißt, es dürfen weder einige Windungen der Schraubenfeder im Eis festsitzen, noch darf sich oberhalb der Rollmembran eine ihr Abrollen verhindernde dicke Eisschicht bilden können. Diese Aufgabe wird nach der Erfindung dadurch gelöst, daß

– die topfförmige Rollmembran auf eine topfförmige Hülse aufgesetzt ist, an deren Mantelfläche und Außenfläche des Bodens die Rollmembran anliegt,

– aus dem Boden der topfförmigen Hülse zur Öffnung des Topfes hin dünnwandige Rippen hervorstreben,

– die Schraubenfeder eine Druckfeder ist, welche die die Düse aufnehmende rohrförmige Hülse umgibt und mit ihrem einen Ende an den Stirnflächen der Rippen anliegt, während sie sich mit dem anderen Ende an dem oberen Gehäuseteil abstützt,

– die topfförmige Hülse in Höhe der untersten Federwindung oder darunter eine Abflußmöglichkeit für das sich in der topfförmigen Hülse angesammelte Wasser aufweist,

– in der Höhe oder unterhalb der Abflußmöglichkeit in der topfförmigen Hülse eine Öffnung in das obere Gehäuseteil eingebracht ist.

Bei der Montage einer solchen Ausführungsform der Verstellvorrichtung besteht keine Verletzungsgefahr, da sämtliche durch die Reinigungsflüssigkeit verstellbaren Bauteile im Inneren des Gehäuses liegen.

Weiterhin ist es vorteilhaft, wenn die Rollmembran in der Ruhestellung der Düse weitestgehend in dem unteren Gehäuseteil angeordnet ist. Dadurch baut für einen bestimmten Verstellweg der Düse die Rollmembran so klein wie möglich.

Vorteilhaft ist es weiterhin, wenn die Rippen radial zur Mittelachse der topfförmigen Hülse verlaufen und mit einer schmalen Seitenfläche an die zylindrische Innenfläche der topfförmigen Hülse angeformt sind. Dadurch ist die Hülse sehr stabil, und ein Abrutschen der Feder von den Stirnflächen der Rippen ist nicht möglich, wenn diese bis nahe an die die Düse tragende, rohrförmige Hülse herangehen. In diesem Zusammenhang ist es weiterhin vorteilhaft, wenn eine Rippe eine zylindrische Innenhülse bildet, an dessen Mantelfläche die radial verlaufenden Rippen angeformt sind. Durch eine solche Ausführungsform erhöht sich nicht nur die Stabilität der Hülse, sondern in der topfförmigen Hülse angesammeltes Wasser drückt im gefrorenen Zustand gegen die Mantelfläche der zylindrischen Innenhülse und somit nicht gegen die rohrförmige Hülse. Somit kann zwischen der rohrförmigen Hülse und deren Zuleitung für die Reinigungsflüssigkeit keine undichte Stelle entstehen.

Außerdem ist es vorteilhaft, wenn die topfförmige Hülse sich mit ihrem äußeren Randbereich bis oberhalb der Rollmembran und zu der der Rollmembran benachbarten Wandung des oberen Gehäuseteils hin erstreckt und der äußere Randbereich trichterförmig ausgeführt ist. Dadurch ist die Rollmembran im Bereich ihrer Einspannstelle weitestgehend gegen Wasser, welches durch die Karosserieöffnung hindurch eindringen kann, geschützt. In diesem Zusammenhang ist es weiterhin vorteilhaft, wenn der große Durchmesser des Kegelstumpfes etwa dem Innendurchmesser des oberen Gehäuseteils entspricht und die erste Windung der Schraubenfeder am großen Durchmesser des Kegelstumpfes als Anschlag für die Stirnfläche der topfförmigen Hülse dient. Dadurch baut das Gehäuse der Verstellvorrichtung nicht nur in seiner Höhe sondern auch in seinem Durchmesser sehr klein.

Ferner ist es vorteilhaft, wenn das Gehäuse der Verstellvorrichtung mittels eines in eine zur Rollmembran konzentrische Öffnung des oberen Gehäuseteils eingreifenden Schraubenringes in einer Karosserieöffnung festsetzbar ist. Durch eine solche Lösung ist die Verstellvorrichtung nachträglich einfach und leicht zu montieren, da nachdem das Gehäuse der Verstellvorrichtung unterhalb der Karosserieöffnung eingesetzt ist, der Schraubring von der Außenseite der Fahrzeugkarosserie her in die Gehäuseöffnung eingedreht wird, bis der Schraubring an dem äußeren Randbereich der Karosserieöffnung anliegt. Hierbei ist es weiterhin vorteilhaft, wenn der Durchmesser der zylindrischen Innenfläche des Schraubringes etwa dem Außendurchmesser der rohrförmigen Hülse entspricht. Dadurch dient der Schraubring nicht nur zum Festsetzen der Verstellvorrichtung in der Karosserieöffnung, sondern auch als Führung für die verstellbare Düse.

Weiterhin ist es vorteilhaft, wenn die Abflußmöglichkeit der topfförmigen Hülse von ihrer oberen Öffnung gebildet wird und eine dem Wasserablauf dienende Öffnung in dem oberen Gehäuseteil sich bis oberhalb des Öffnungsrandes der topfförmigen Hülse erstreckt. Hierbei ist es zweckmäßig, wenn die Öffnung von einem Schlitz gebildet wird, welcher sich über die gesamte Höhe der zylindrischen Wandung des oberen Gehäuseteils erstreckt. Dadurch kann, auch wenn die Düse in ihrer Gebrauchsstellung ausgefahren ist, durch die Karosserieöffnung in das Gehäuse der Verstellvorrichtung eingedrungenes Wasser durch die Öffnung des oberen Gehäuseteils nach außen abfließen. Hierbei ist es zweckmäßig, wenn in das obere Gehäuseteil mehrere Öffnungen eingebracht sind, welche auf dem Umfang der zylindrischen Wandung des oberen Wandungsteils gleichmäßig verteilt sind. Dies ist besonders vorteilhaft, wenn in der Anbaulage des Gehäuses der Verstellvorrichtung ihre Mittelachse in einem Winkel zur Senkrechten steht, da auch dann gewährleistet ist, daß sämtliches aus der topfförmigen Hülse abfließendes Wasser durch eine der Öffnungen des oberen Gehäuseteils abfließt.

Die Erfindung ist in der Zeichnung dargestellt, und zwar zeigt

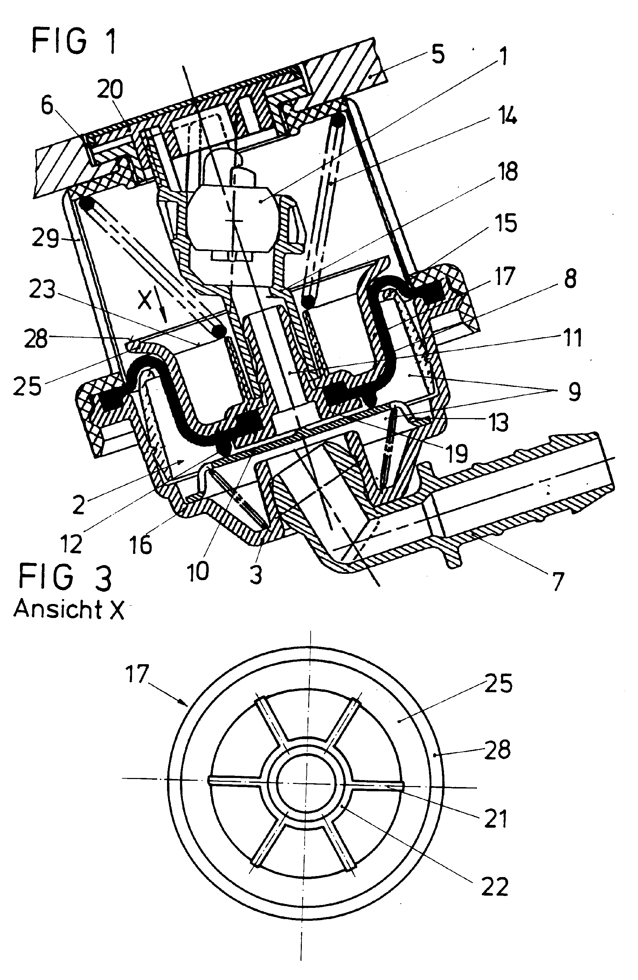

Figur 1 einen vertikalen Längsschnitt durch eine Verstellvorrichtung einer Düse in Ruhestellung,

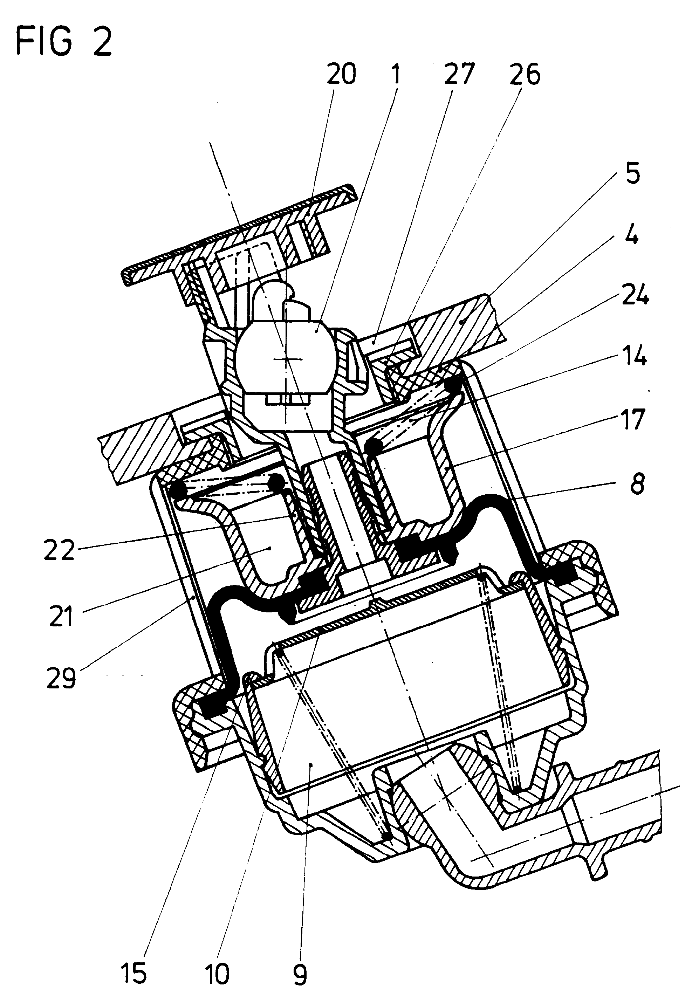

Figur 2 die Verstellvorrichtung nach Figur 1 mit der Düse in Gebrauchsstellung und

Figur 3 eine Ansicht aus Richtung "X" auf eine topfförmige Hülse der Verstellvorrichtung als Einzelteil.

Das die Düse (1) und die Ventileinrichtung (2) tragende Gehäuse (3, 4) ist unterhalb einer Karosseriewandung (5) angeordnet. In der Ruhestellung der Düse (1) liegt die Düse innerhalb des Gehäuses (3, 4). In der Gebrauchsstellung ist die Düse (1) aus ihrer zurückversetzten Ruhelage durch die Karosserieöffnung (6) hindurchgefahren und ragt über die Karosseriewandung (5) hinaus.

Wird eine in der Zeichnung nicht dargestellte Druckerzeugungseinrichtung betätigt, so strömt durch den Anschlußstutzen (7) Reinigungsflüssigkeit in den von dem unteren Gehäuseteil (3) und der mit ihrem umlaufenden Rand zwischen dem unteren und oberen Gehäuseteil (3, 4) eingespannten Rollmembran (8) gebildeten Innenraum (9). Der von dem unteren Gehäuseteil (3) und der Rollmembran (8) gebildete Innenraum (9) bildet den Druckraum, der durch das Ventil (2) gegenüber der Düse (1) abgedichtet ist. Das Ventil (2) wird gebildet durch den Deckel (10), der bei geschlossenem Ventil an der Rollmembran (8) anliegt und die Zuleitungsöffnung (11) zu der Düse (1) abdichtet. Dazu weist die Rollmembran (8) an ihrer zu dem Deckel gerichteten Fläche eine kreisringförmig umlaufende Dichtlippe (12) auf. Der in der Ruhestellung der Düse (1) an der Bodenfläche des unteren Gehäuseteils (3) mit seinem umlaufenden äußeren Rand anliegende Deckel (10) weist in seinem Randbereich Öffnungen (13) auf, durch welche die Reinigungsflüssigkeit hindurchströmt. Durch die in den Innenraum (9) einströmende Reinigungsflüssigkeit baut sich ein solch großer Druck auf, daß die Rollmembran (8) entgegen der Kraft der in den oberen Gehäuseteil (4) eingesetzten Druckfeder (14) in Richtung der Düse (1) angehoben wird. Dabei fährt die Düse (1) von ihrer Ruhestellung in die Gebrauchsstellung, bei welcher die Düse (1) aus der Karosserieöffnung (6) herausragt. Beim Hochfahren der Düse (1) macht der Deckel (10) diese Bewegung mit und liegt solange an der Dichtlippe (12) an, bis der äußere Randbereich des Deckels an den ortsfesten Anschlag (15) anschlägt. In dieser Lage verharrt der Deckel (10), wobei die Düse noch geringfügig weiter nach oben fährt. Damit wird die Zuleitungsöffnung (11), welche zur Düse (1) führt, geöffnet, so daß die Reinigungsflüssigkeit aus dem Innenraum (9) zu der Düse strömen kann.

Wird die Druckerzeugungseinrichtung ausgeschaltet, so fährt die Rollmembran (8) nach unten und wird von der Druckfeder (14) gegen den Deckel (10) gepreßt, bis der Deckel (10) entgegen der Kraft der Druckfeder (14) wieder gegen den Boden (16) des unteren Gehäuseteils (3) gepreßt wird. In dieser Ruhestellung ist die Rollmembran (8) im wesentlichen im unteren Gehäuseteil (3) angeordnet und weist eine topfförmige Gestalt auf. In die topfförmige Rollmembran (8) ist eine topfförmige Hülse (17) eingesetzt, welche mit ihrer Mantelfläche und der Außenseite ihres Bodens an der Rollmembran (8) anliegt. Sowohl der Boden der topfförmigen Hülse (17) als auch der Boden der topfförmigen Rollmembran (8) weist zentral eine Öffnung für die Zuleitung der Reinigungsflüssigkeit zur Düse (1) hin auf. Die topfförmige Hülse und die Rollmembran (8) sind mit der die Düse aufnehmenden rohrförmigen Hülse (18) durch das rohrförmige Verbindungsstück (19) miteinander gekoppelt. Auf das die Düse tragende Ende der rohrförmigen Hülse (18) ist eine Kappe (20) aufgeschraubt, welche bei versenkter Ruhelage der Düse die Sicht durch die Karosserieöffnung hindurch in das innere Gehäuse abschirmt.

Aus dem Boden der topfförmigen Hülse streben zur Öffnung des Topfes hin dünnwandige Rippen (21 und 22) hervor. Die Rippe (22) bildet für die topfförmige Hülse (17) eine zylindrische Innenhülse, welche die die Düse aufnehmende rohrförmige Hülse (18) umgibt. Die Rippen (21) verlaufen radial zur Mittelachse der topfförmigen Hülse (17) und sind sowohl an die Mantelfläche der zylindrischen Innenhülse (22) als auch an die zylindrische Innenseite der topfförmigen Hülse (17) angeformt. An den Stirnflächen (23) der Rippen (21) liegt die die Düse (1) umgebende Schraubenfeder mit ihrem freien Ende an. Mit dem anderen Ende stützt sich die Schraubenfeder an der Grundfläche des oberen Gehäuseteils (4) ab. Die Schraubenfeder (14) ist kegelstumpfförmig ausgeführt und liegt mit der Schraubenwindung (24) an ihrem großen Durchmesser an der Bodenfläche des oberen Gehäuseteils (4) an. Die Schraubenwindung (24) dient als Anschlag für die topfförmige Hülse (17), da sie in der Gebrauchsstellung der Düse (1) mit der Stirnfläche ihres trichterförmig ausgeführten Randbereichs (26) an der Schraubenwindung (24) anschlägt. Beim Hochfahren der Düse von ihrer versenkten Ruhestellung in ihre Gebrauchsstellung, dient die zylindrische Innenseite des Schraubringes (26) als Führung für die die Düse (1) aufnehmende rohrförmige Hülse (18). Der Schraubring (26) ist von der Außenseite der Karosseriewandung (5) in die Öffnung (27) des oberen Gehäuseteils (4) eingedreht und hält das unter die Karosseriewandung (5) eingesetzte Gehäuse (3, 4) an der Karosseriewandung (5) fest.

In der topfförmigen Hülse kann sich durch die Karosserieöffnung (6) eingedrungenes Wasser sammeln. Steigt das Wasser über die als Abflußmöglichkeit für das Wasser dienende äußere Kante (28) der topfförmigen Hülse, so fließt es durch die in das obere Gehäuseteil (4) eingebrachten Öffnungen (29) nach außen ab. Die Öffnungen (29) sind schlitzartig ausgeführt und erstrecken sich von der Nähe der Einspannstelle der Rollmembran (8) bis zur Bodenfläche des oberen Gehäuseteils (4) hin und sind über den Umfang des zylindrischen oberen Gehäuseteils gleichmäßig verteilt. Dadurch ist gewährleistet, daß das Wasser auch abfließen kann, wenn die Mittelachse des Gehäuses (3, 4) in einem spitzen Winkel zur Senkrechten steht.

## Patentansprüche

1. Scheibenwaschanlage für Kraftfahrzeuge, insbesondere Streuscheibenwaschanlage, mit einer Druckerzeugungseinrichtung zur Förderung der Reinigungsflüssigkeit, mit einer unterhalb einer Karosserieöffnung (6) einbaubaren Verstellvorrichtung der Düse (1), welche aus einer zurückversetzten Ruhelage gegen die Kraft einer Schraubenfeder (14) in eine Gebrauchsstellung ausfahrbar ist, und mit einem Düsenträger, welcher aus einer zwischen einem oberen (4) und unteren (3) Gehäuseteil eingespannten Rollmembran und einer in eine zentrale Öffnung der Rollmembran (8) eingesetzten rohrförmigen Hülse (18) gebildet wird, deren mit der Düse verbundenes Ende aus der Öffnung der in der Ruhestellung eine topfförmige Gestalt aufweisenden Rollmembran (8) herausragt, der als Stützfläche eine zylindrische Innenfläche des oberen Gehäuseteils (4) dient, dadurch gekennzeichnet, daß
    – die topfförmige Rollmembran (8) auf eine topfförmige Hülse (17) aufgesetzt ist, an deren Mantelfläche und Außenfläche des Bodens die Rollmembran (8) anliegt,
    – aus dem Boden der topfförmigen Hülse (17) zur Öffnung des Topfes hin dünnwandige Rippen (21, 22) hervorstreben,
    – die Schraubenfeder (14) eine Druckfeder ist, welche die die Düse (1) aufnehmende rohrförmige Hülse

**4**

(18) umgibt und mit ihrem einen Ende an den Stirnflächen (23) der Rippen (21) anliegt, während sie sich mit dem anderen Ende an dem oberen Gehäuseteil (4) abstützt,
– die topfförmige Hülse (17) in Höhe der untersten Federwindung oder darunter eine Abflußmöglichkeit (28) für das sich in der topfförmigen Hülse (17) angesammelte Wasser aufweist,
– in der Höhe oder unterhalb der Abflußmöglichkeit (28) in der topfförmigen Hülse (17) eine Öffnung (29) in das obere Gehäuseteil eingebracht ist.

2. Scheibenwaschanlage nach Anspruch 1, dadurch gekennzeichnet, daß die Rollmembran (8) in der Ruhestellung der Düse (1) weitestgehend in dem unteren Gehäuseteil (3) angeordnet ist.

3. Scheibenwaschanlage nach Anspruch 1 oder 2, dadurch gekennzeichnet, daß die Rippen (21) radial zur Mittelachse der topfförmigen Hülse verlaufen.

4. Scheibenwaschanlage nach Anspruch 3, dadurch gekennzeichnet, daß die Rippen (21) mit einer schmalen Seitenfläche an die zylindrische Innenfläche der topfförmigen Hülse (17) angeformt sind.

5. Scheibenwaschanlage nach Anspruch 3 oder 4, dadurch gekennzeichnet, daß eine Rippe (22) eine zylindrische Innenhülse bildet, an dessen Mantelfläche die radial verlaufenden Rippen (21) angeformt sind.

6. Scheibenwaschanlage nach einem der Ansprüche 1 bis 5, dadurch gekennzeichnet, daß die topfförmige Hülse (17) sich mit ihrem äußeren Randbereich (25) bis oberhalb der Rollmembran (8) und zu der der Rollmembran benachbarten Wandung des oberen Gehäuseteils (4) hin erstreckt.

7. Scheibenwaschanlage nach Anspruch 6, dadurch gekennzeichnet, daß der äußere Randbereich (25) trichterförmig ausgeführt ist.

8. Scheibenwaschanlage nach einem der Ansprüche 1 bis 7, dadurch gekennzeichnet, daß die Schraubenfeder (14) eine kegelstumpfförmige Gestalt aufweist.

9. Scheibenwaschanlage nach Anspruch 8, daß der große Durchmesser des Kegelstumpfes etwa dem Innendurchmesser des oberen Gehäuseteils (4) entspricht.

10. Scheibenwaschanlage nach Anspruch 8 oder 9, dadurch gekennzeichnet, daß die erste Windung (24) der Schraubenfeder (14) am großen Durchmesser des Kegelstumpfes als Anschlag für die Stirnfläche der trichterförmigen Hülse (17) dient.

11. Scheibenwaschanlage nach einem der Ansprüche 1 bis 10, dadurch gekennzeichnet, daß das Gehäuse (3, 4) der Verstellvorrichtung mittels eines in einer zur Rollmembran (8) konzentrischen Öffnung des oberen Gehäuseteils (4) eingreifenden Schraubenringes (26) in einer Karosserieöffnung (6) festsetzbar ist.

12. Scheibenwaschanlage nach Anspruch 11, dadurch gekennzeichnet, daß der Durchmesser der zylindrischen Innenfläche des Schraubringes (26) etwa dem Außendurchmesser der rohrförmigen Hülse (18) entspricht.

13. Scheibenwaschanlage nach einem der Ansprüche 1 bis 12, dadurch gekennzeichnet, daß die Abflußmöglichkeit der topfförmigen Hülse (17) aus mindestens einer in die Wandung der Hülse (17) eingebrachten Öffnung besteht.

14. Scheibenwaschanlage nach einem der Ansprüche 1 bis 12, dadurch gekennzeichnet, daß die Abflußmöglichkeit der topfförmigen Hülse (17) aus mindestens einer in den oberen Randbereich der topfförmigen Hülse (17) eingebrachten Aussparung besteht.

15. Scheibenwaschanlage nach einem der Ansprüche 1 bis 12, dadurch gekennzeichnet, daß die Abflußmöglichkeit der topfförmigen Hülse von ihrer äußeren Topfkante (28) gebildet wird.

16. Scheibenwaschanlage nach einem der Ansprüche 1 bis 15, dadurch gekennzeichnet, daß eine Öffnung (29) in dem oberen Gehäuseteil (4) sich bis oberhalb der Abflußmöglichkeit (28) der topfförmigen Hülse (17) erstreckt.

17. Scheibenwaschanlage nach einem der Ansprüche 1 bis 16, dadurch gekennzeichnet, daß die Öffnung (29) von einem Schlitz gebildet wird, welcher sich über die gesamte Höhe der zylindrischen Wandung des oberen Gehäuseteils (4) erstreckt.

18. Scheibenwaschanlage nach einem der Ansprüche 1 bis 17, dadurch gekennzeichnet, daß in das obere Gehäuseteil (4) mehrere Öffnungen eingebracht sind, welche auf dem Umfang der zylindrischen Wandung des oberen Gehäuseteils (4) gleichmäßig verteilt sind.

## Claims

1. Window washer system for motor vehicles, more particularly a lens glass washer system, having a pressure generating device to convey the cleaning fluid, a nozzle (1) adjustment device which can be installed beneath an opening (6) in the vehicle body and can be moved, out of a rest position in which it is set back, against the force of a helical spring (14) into an operational position, and having a nozzle carrier made up of a roller membrane gripped between an upper (4) and a lower (3) casing portion and a tubular sleeve (18) inserted in a central opening in the roller membrane (8), of which the end connected to the nozzle protrudes from the opening in the roller membrane (8), which in the rest position is cup-shaped, one cylindrical inside face of the upper casing portion (4) serving as a supporting surface for said membrane, characterised in that:

- the cup-shaped roller membrane (8) sits on a cup-shaped sleeve (17), against whose circumferential surface and outer surface of the base rests the roller membrane (8),
- thin ribs (21, 22) protrude out of the base of the cup-shaped sleeve (17) towards the opening in the cup,
- the helical spring (14) is a compression spring which encircles the tubular sleeve (18) accommodating the nozzle (1) and rests with one end against the end faces (23) of the ribs (21), while its other end rests on the upper casing portion (4),
- level with the lowest coil of the spring or therebelow, the cup-shaped sleeve (17) incorporates a means (28) of draining away the water that has collected in the cup-shaped sleeve (17),
- an opening (29) is made in the upper casing portion, level with or below the means of drainage (28) in the cup-shaped sleeve (17).

2. Window washer system according to claim 1, characterised in that the roller membrane (8) is arranged as much as possible in the lower casing portion (3) when the nozzle (1) is in the rest position.

3. Window washer system according to claim 1 or 2, characterised in that the ribs (21) extend radially to the centre axis of the cup-shaped sleeve.

4. Window washer system according to claim 3, characterised in that the ribs (21) are formed with one narrow lateral face on the cylindrical inner surface of the cup-shaped sleeve (17).

5. Window washer system according to claim 3 or 4, characterised in that one rib (22) forms a cylindrical inner sleeve onto whose circumferential surface are formed the radially extending ribs (21).

6. Window washer system according to one of claims 1 to 5, characterised in that the cup-shaped sleeve (17) extends with its outer rim (25) up past the roller membrane (8) and to the wall of the upper casing portion (4) adjoining the roller membrane.

7. Window washer system according to claim 6, characterised in that the outer rim is funnel-shaped.

8. Window washer system according to one of claims 1 to 7, characterised in that the helical spring (14) has the shape of a truncated core.

9. Window washer system according to claim 8, characterised in that the large diameter of the truncated cone corresponds roughly to the internal diameter of the upper casing portion (4).

10. Window washer system according to claim 8 or 9, characterised in that the first coil (24) of the helical spring (14) at the large diameter of the truncated cone serves as a stop for the end face of the funnel-shaped sleeve (17).

11. Window washer system according to one of claims 1 to 10, characterised in that the casing (3, 4) of the adjustment device can be fixed in an opening (6) in the vehicle body by means of a helical ring (26) engaging in an opening in the upper casing portion (4) concentric to the roller membrane (8).

12. Window washer system according to claim 11, characterised in that the diameter of the cylindrical inside face of the helical ring (26) roughly corresponds to the external diameter of the tubular sleeve (18).

13. Window washer system acccording to one of claims 1 to 12, characterised in that the means of draining the cup-shaped sleeve (17) comprises at least one opening made in the wall of the sleeve (17).

14. Window washer system according to one of claims 1 to 12, characterised in that the means of draining the cup-shaped sleeve (17) comprises at least one recess made in the upper rim of the cup-shaped sleeve (17).

15. Window washer system according to one of claims 1 to 12, characterised in that the means of draining the cup-shaped sleeve is constituted by its outer cup edge (28).

16. Window washer system according to one of claims 1 to 15, characterised in that an opening (29) in the upper casing portion (4) extends up past the drainage means (28) in the cup-shaped sleeve (17).

17. Window washer system according to one of claims 1 to 16, characterised in that the opening (29) is formed by a slot extending the entire height of the cylindrical wall of the upper casing portion (4).

18. Window washer system according to one of claims 1 to 17, characterised in that a plurality of openings are made in the upper casing portion (4) which are uniformly distributed over the circumference of the cylindrical wall of the upper wall portion (4).

**Revendications**

1. Installation de lave-glace pour véhicules automobiles, notamment installation de lavage pour diffuseurs de feux, comprenant un dispositif générateur de pression destiné à refouler le liquide de nettoyage, un dispositif de commande de la buse (1), qui peut être monté au-dessous d'une ouverture (6) de la carrosserie, buse qui

EP 0 395 930 B1

peut être amenée d'une position de repos rentrée à une position de service à l'encontre de la force d'un ressort hélicoïdal (14), et un porte-buse qui est composé d'une membrane roulante serrée entre une partie supérieure (4) de boîtier et une partie inférieure (3) de boîtier, et d'une douille tubulaire (18) emboîtée dans une ouverture centrale de la membrane roulante (8), et dont l'extrémité solidaire de la buse fait saillie en dehors de l'ouverture de la membrane (8), qui présente une forme de godet dans la position de repos, et pour laquelle il est prévu comme surface d'appui une surface interne cylindrique de la partie supérieure (4) de boîtier, caractérisée en ce que

– la membrane roulante (8) est emboîtée sur une douille (17) en forme de godet, la membrane roulante étant en contact avec la surface latérale de cette douille et avec la surface externe du fond de cette douille ;

– des nervures (21, 22) à paroi mince font saillie sur le fond de la douille (17) en forme de godet vers l'ouverture ;

– le ressort hélicoïdal (14) est un ressort de compression qui entoure la douille tubulaire (18) qui reçoit la buse (1) et est en appui par une de ses extrémités sur les surfaces frontales (23) des nervures (21) tandis qu'il prend appui contre la partie supérieure (4) du boîtier par son autre extrémité ;

– la douille (17) en forme de godet présente, à la hauteur de la spire extrême inférieure du ressort ou au-dessous, une voie d'écoulement (28) pour l'eau accumulée dans la douille (17) en forme de godet,

– une ouverture (29) est pratiquée dans la partie supérieure du boîtier, à la hauteur ou au-dessous de la voie d'écoulement (28) ménagée dans la douille (17) en forme de godet.

2. Installation de lave-glace selon la revendication 1, caractérisée en ce que la membrane roulante (8) est disposée en très grande partie dans la partie inférieure (3) du boîtier dans la position de repos de la buse (1).

3. Installation de lave-glace selon la revendication 1 ou 2, caractérisée en ce que les nervures (21) s'étendent radialement par rapport à l'axe médian de la douille en forme de godet.

4. Installation de lave-glace selon la revendication 3, caractérisée en ce que les nervures (21) sont venues de matière, par une surface latérale étroite, avec la surface interne cylindrique de la douille (17) en forme de godet.

5. Installation de lave-glace selon la revendication 3 ou 4, caractérisée en ce qu'une nervure (22) forme un collet cylindrique avec la surface latérale duquel les nervures (21) s'étendant radialement sont venues de matière.

6. Installation de lave-glace selon une des revendications 1 à 5, caractérisée en ce que la région marginale extérieure (25) de la douille (17) en forme de godet s'étend jusqu'au-dessus de la membrane roulante (8) et se prolonge en direction de la paroi de la partie supérieure (4) du boîtier qui est adjacente à la membrane roulante.

7. Installation de lave-glace selon la revendication 7, caractérisée en ce que la région marginale extérieure (25) est en forme d'entonnoir.

8. Installation de lave-glace selon une des revendications 1 à 7, caractérisée en ce que le ressort hélicoïdal (14) présente une forme tronconique.

9. Installation de lave-glace selon la revendication 8, caractérisée en ce que le grand diamètre du tronc de cône correspond peu près au diamètre intérieur de la partie supérieure (4) du boîtier.

10. Installation de lave-glace selon la revendication 8 ou 9, caractérisée en ce que la première spire (24) du ressort hélicoïdal (14) située au grand diamètre du tronc de cône sert de butée pour la surface frontale en entonnoir de la douille (17).

11. Installation de lave-glace selon une des revendications 1 à 10, caractérisée en ce que le boîtier (3, 4) du dispositif de commande peut être fixé dans une ouverture (6) de la carrosserie, au moyen d'une bague filetée (26) qui est vissée dans une ouverture de la partie supérieure (4) du boîtier qui est concentrique à la membrane roulante (8).

12. Installation de lave-glace selon la revendication 11, caractérisée en ce que le diamètre de la surface interne cylindrique de la bague filetée (26) correspond à peu près au diamètre extérieur de la douille tubulaire (18).

13. Installation de lave-glace selon une des revendications 1 à 12, caractérisée en ce que la voie d'écoulement de la douille (17) en forme de godet est composée d'au moins une ouverture ménagée dans la paroi de la douille (17).

14. Installation de lave-glace selon une des revendications 1 à 12, caractérisée en ce que la voie d'écoulement de la douille (17) en forme de godet est composée d'au moins un évidement ménagé dans la région marginale supérieure de la douille (17) en forme de godet.

15. Installation de lave-glace selon une des revendications 1 à 12, caractérisée en ce que la voie d'écoulement de la douille en forme de godet est formée par son bord extérieur (28) de godet.

16. Installation de lave-glace selon une des revendications 1 à 15, caractérisée en ce qu'une ouverture (29) pratiquée dans la partie supérieure (4) du boîtier se prolonge jusqu'au-dessus de la voie d'écoulement (28) de la douille (17) en forme de godet.

17. Installation de lave-glace selon une des revendications 1 à 16, caractérisée en ce que l'ouverture (29) est formée par une fente qui s'étend sur toute la hauteur de la paroi cylindrique de la partie supérieure (4) du boîtier.

18. Installation de lave-glace selon une des revendications 1 à 17, caractérisée en ce que, dans la partie supérieure (4) du boîtier, sont ménagées plusieurs ouvertures qui sont réparties uniformément sur la périphérie de la paroi cylindrique de la partie supérieure (4) du boîtier.

FIG 1

FIG 3
Ansicht X

FIG 2